(19) Europäisches Patentamt
European Patent Office
Office européen des brevets

(11) **EP 3 876 485 A1**

(12) **EUROPEAN PATENT APPLICATION**
published in accordance with Art. 153(4) EPC

(43) Date of publication:
**08.09.2021 Bulletin 2021/36**

(51) Int Cl.:
**H04L 12/917** *(2013.01)*

(21) Application number: **18939669.0**

(22) Date of filing: **06.12.2018**

(86) International application number:
**PCT/CN2018/119597**

(87) International publication number:
**WO 2020/093502 (14.05.2020 Gazette 2020/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.11.2018 CN 201811320541**

(71) Applicant: **Wangsu Science & Technology Co., Ltd.**
**Shanghai 201800 (CN)**

(72) Inventor: **ZHAO, Rui**
**Shanghai 201800 (CN)**

(74) Representative: **De Arpe Tejero, Manuel**
**Arpe Patentes y Marcas**
**Alcalá, 26, 5ª Planta**
**28014 Madrid (ES)**

(54) **NOMINAL BANDWIDTH ADJUSTING METHOD AND DEVICE**

(57) The present disclosure provides a method and a device for adjusting a rated bandwidth, and belongs to the field of data transmission technology. The method includes: for any one product line of any one network device in a data transmission network, periodically according to a preset benchmark health value and a real-time health value of the product line in a current period, determining a rated bandwidth adjustment mode of the product line; if the rated bandwidth adjustment mode is up-regulation, according to a fluctuation of the real-time health value of the product line in the current period, calculating a real-time up-regulation ratio of the rated bandwidth corresponding to the product line; according to the real-time up-regulation ratio and a pre-stored basic up-regulation ratio of the rated bandwidth corresponding to the product line, adjusting a current rated bandwidth corresponding to the product line; and if the rated bandwidth adjustment mode is down-regulation, according to a preset down-regulation ratio of the rated bandwidth and real-time bandwidth data of the network device in the current period, adjusting the current rated bandwidth corresponding to the product line. By adopting the present disclosure, the transmission quality of the data transmission network can be guaranteed to a certain extent.

For any one product line of any one network device in a data transmission network, periodically according to a preset benchmark health value and a real-time health value of the product line in a current period, determining a rated bandwidth adjustment mode of the product line — 201

If the rated bandwidth adjustment mode is up-regulation, according to a fluctuation of the real-time health value of the product line in the current period, calculating a real-time up-regulation ratio of the rated bandwidth corresponding to the product line — 202

According to the real-time up-regulation ratio and a pre-stored basic up-regulation ratio of the rated bandwidth corresponding to the product line, adjusting a current rated bandwidth corresponding to the product line — 203

If the rated bandwidth adjustment mode is down-regulation, according to a preset down-regulation ratio of the rated bandwidth and real-time bandwidth data of the network device in the current period, adjusting the current rated bandwidth corresponding to the product line — 204

Figure 2

EP 3 876 485 A1

**Description**

FIELD OF THE DISCLOSURE

The present disclosure generally relates to the field of data transmission technology and, more particularly, relates to a method and a device for adjusting a rated bandwidth.

BACKGROUND

A rated bandwidth of a network device refers to a total amount of data of the network traffic that is allowed to pass through in a unit time when the network device is under normal working conditions. In a process of transmitting data in a data transmission network, the current bandwidth load of each network device is often determined according to the rated bandwidth of each network device in the data transmission network, thereby determining the specific transmission path of the network traffic.

Before adding a batch of network devices to the data transmission network to provide data transmission services, the rated bandwidth of the network device can often be evaluated by a stress test. For example, a technician first randomly selects multiple network devices, and then detects the maximum data amount of the network traffic that can be transmitted by each selected network device in a period of time. The calculated average value or the mode of the bandwidths of the plurality of network devices is determined as the rated bandwidth of the current batch of network devices.

In the present disclosure, the inventors have found that existing technologies have at least the following issues.

First, the rated bandwidth obtained by a sampling test cannot accurately reflect the rated bandwidth of each network device. Second, after being put into use, the network device will simultaneously support services of multiple types of product lines, e.g., a text transmission product line, an image transmission product line, and a video transmission product line, etc., which are classified according to the type of transmitted data. The rated bandwidth of the network device will vary as the service load ratio of the multiple types of product lines changes. Third, as the time goes by, issues such as hardware aging or failures will cause the rated bandwidth of the network device to drop. Accordingly, the rated bandwidth determined by the stress test will not be effectively applied to the actual planning and scheduling process for transmitting the network data flow. The use of the above rated bandwidth for determining the transmission path will have a substantially great impact on the transmission quality of the data transmission network.

BRIEF SUMMARY OF THE DISCLOSURE

To solve the issues in the existing technologies, the disclosed embodiments of the present disclosure provide a method and a device for adjusting a rated bandwidth. The technical solutions include the following.

One aspect of the present disclosure includes a method for adjusting a rated bandwidth. The method includes:

for any one product line of any one network device in a data transmission network, periodically according to a preset benchmark health value and a real-time health value of the product line in a current period, determining a rated bandwidth adjustment mode of the product line;

if the rated bandwidth adjustment mode is up-regulation, according to a fluctuation of the real-time health value of the product line in the current period, calculating a real-time up-regulation ratio of the rated bandwidth corresponding to the product line;

according to the real-time up-regulation ratio and a pre-stored basic up-regulation ratio of the rated bandwidth corresponding to the product line, adjusting a current rated bandwidth corresponding to the product line; and

if the rated bandwidth adjustment mode is down-regulation, according to a preset down-regulation ratio of the rated bandwidth and real-time bandwidth data of the network device in the current period, adjusting the current rated bandwidth corresponding to the product line.

Optionally, the method further includes:

determining a normal bandwidth value of the network device after each preset time length according to historical bandwidth data of the network device, and determining a normal health value of the product line according to historical health values of the product line; and

based on the normal bandwidth value and the normal health value, calculating and storing the basic up-regulation ratio of the rated bandwidth corresponding to the product line.

Optionally, determining the normal bandwidth value of the network device after each preset time length according to the historical bandwidth data of the network device includes:

obtaining historical bandwidth data of entire network devices in the data transmission network after each preset time length;

according to data distribution characteristics of historical bandwidth data of each network device, classifying the entire network devices using an expectation-maximum (EM) clustering algorithm; and

for any one classification, determining the normal bandwidth value of each network device under the one classification among entire historical bandwidth data of network devices under the one classification by using a preset quantile corresponding to the one classification.

Optionally, determining the normal health value of the product line according to the historical health values of the product line includes:

obtaining historical health values of each product line of each network device in the data transmission network after each preset time length;

according to data distribution characteristics of the historical health values of each product line, classifying entire product lines using an expectation-maximum (EM) clustering algorithm; and

for any one classification, determining the normal health value of each product line under the one classification among entire historical health values of product lines under the one classification by using a preset quantile corresponding to the one classification.

Optionally, based on the normal bandwidth value and the normal health value, calculating and storing the basic up-regulation ratio of the rated bandwidth corresponding to the product line include:

according to the normal bandwidth value and the current rated bandwidth corresponding to the product line, calculating a bandwidth adjustment coefficient of the rated bandwidth corresponding to the product line;

according to the normal health value and the preset benchmark health value of the product line, calculating a health value adjustment coefficient of the rated bandwidth corresponding to the product line; and

according to the bandwidth adjustment coefficient, the health value adjustment coefficient, and a preset up-regulation ratio limiting coefficient, calculating and storing the basic up-regulation ratio of the rated bandwidth corresponding to the product line.

Optionally, periodically according to the preset benchmark health value and the real-time health value of the product line in the current period, determining the rated bandwidth adjustment mode of the product line includes:

periodically calculating an average value of real-time health values of the product line in the current period; and

if the average value is less than the preset benchmark health value of the product line, setting the rated bandwidth adjustment mode of the product line as up-regulation, otherwise as down-regulation.

Optionally, according to the fluctuation of the real-time health value of the product line in the current period, calculating the real-time up-regulation ratio of the rated bandwidth corresponding to the product line includes:

if a real-time bandwidth median of the network device in the current period is greater than a real-time bandwidth median of the network device in a previous period as well as greater than the current rated bandwidth corresponding to the product line, according to the fluctuation of the real-time health value of the product line in the current period, calculating the real-time up-regulation ratio of the rated bandwidth corresponding to the product line; otherwise, setting the rated bandwidth adjustment mode as non-adjustment.

Optionally, according to the fluctuation of the real-time health value of the product line in the current period, calculating the real-time up-regulation ratio of the rated bandwidth corresponding to the product line includes:

according to the fluctuation of the real-time health value of the product line in the current period, establishing a real-time variation function of a health value adjustment coefficient corresponding to the product line;

according to a derivative of the real-time variation function over the real-time health value and a preset smooth coefficient of the product line, as well as a historical smooth gradient corresponding to the real-time variation function, calculating a latest smooth gradient corresponding to the real-time variation function; and

according to a historical up-regulation ratio of the rated bandwidth corresponding to the product line in a historical period and the latest smooth gradient, calculating the real-time up-regulation ratio of the rated bandwidth corresponding to the product line.

Optionally, according to the historical up-regulation ratio of the rated bandwidth corresponding to the product line in the historical period and the latest smooth gradient, calculating the real-time up-regulation ratio of the rated bandwidth corresponding to the product line includes:

according to a quantity of up-regulation times of the rated bandwidth and a preset up-regulation attenuation ratio corresponding to the product line in the current period, updating a control coefficient of a current up-regulation step-size corresponding to the product line; and

according to the historical up-regulation ratio of the rated bandwidth corresponding to the product line in the historical period, and a product of the latest smooth gradient and the updated control coefficient of the up-regulation step-size, calculating the real-time up-regulation ratio of the rated bandwidth corresponding to the product line.

Optionally, the method further includes:
generating the health value by a calculation based on performance indexes of the network device and service parameters of the product line.

Another aspect of the present disclosure includes a device for adjusting a rated bandwidth, wherein the device includes:

a determination module, configured to, for any one product line of any one network device in a data transmission network, periodically according to a preset benchmark health value and a real-time health value of the product line in a current period, determine a rated bandwidth adjustment mode of the product line;

an up-regulation module, configured to, if the rated bandwidth adjustment mode is up-regulation, according to a fluctuation of the real-time health value of the product line in the current period, calculate a real-time up-regulation ratio of the rated bandwidth corresponding to the product line, and according to the real-time up-regulation ratio and a pre-stored basic up-regulation ratio of the rated bandwidth corresponding to the product line, adjust a current rated bandwidth corresponding to the product line; and

a down-modulation module, configured to, if the rated bandwidth adjustment mode is down-regulation, according to a preset down-regulation ratio of the rated bandwidth and real-time bandwidth data of the network device in the current period, adjust the current rated bandwidth corresponding to the product line.

Optionally, the device further includes a calculation module, configured to:

determine a normal bandwidth value of the network device after each preset time length according to historical bandwidth data of the network device, and determine a normal health value of the product line according to historical health values of the product line; and

based on the normal bandwidth value and the normal health value, calculate and store the basic up-regulation ratio of the rated bandwidth corresponding to the product line.

Optionally, the calculation module is specifically configured to:

obtain historical bandwidth data of entire network devices in the data transmission network after each preset time length;

according to data distribution characteristics of historical bandwidth data of each network device, classify the entire network devices using an expectation-maximum (EM) clustering algorithm; and

for any one classification, determine the normal bandwidth value of each network device under the one classification among entire historical bandwidth data of network devices under the one classification by using a preset quantile corresponding to the one classification.

Optionally, the calculation module is specifically configured to:

obtain historical health values of each product line of each network device in the data transmission network after each preset time length;

according to data distribution characteristics of the historical health values of each product line, classify entire product lines using an expectation-maximum (EM) clustering algorithm; and

for any one classification, determine the normal health value of each product line under the one classification among entire historical health values of product lines under the one classification by using a preset quantile corresponding to the one classification.

Optionally, the calculation module is specifically configured to:

according to the normal bandwidth value and the current rated bandwidth corresponding to the product line, calculate a bandwidth adjustment coefficient of the rated bandwidth corresponding to the product line;
according to the normal health value and the preset benchmark health value of the product line, calculate a health value adjustment coefficient of the rated bandwidth corresponding to the product line; and
according to the bandwidth adjustment coefficient, the health value adjustment coefficient, and a preset up-regulation ratio limiting coefficient, calculate and store the basic up-regulation ratio of the rated bandwidth corresponding to the product line.

Optionally, the determination module is specifically configured to:

periodically calculate an average value of real-time health values of the product line in the current period; and
if the average value is less than the preset benchmark health value of the product line, set the rated bandwidth adjustment mode of the product line as up-regulation, otherwise as down-regulation.

Optionally, the up-regulation module is specifically configured to:
if a real-time bandwidth median of the network device in the current period is greater than a real-time bandwidth median of the network device in a previous period as well as greater than the current rated bandwidth corresponding to the product line, according to the fluctuation of the real-time health value of the product line in the current period, calculate the real-time up-regulation ratio of the rated bandwidth corresponding to the product line; otherwise, set the rated bandwidth adjustment mode as non-adjustment.
Optionally, the up-regulation module is specifically configured to:

according to the fluctuation of the real-time health value of the product line in the current period, establish a real-time variation function of a health value adjustment coefficient corresponding to the product line;
according to a derivative of the real-time variation function over the real-time health value and a preset smooth coefficient of the product line, as well as a historical smooth gradient corresponding to the real-time variation function, calculate a latest smooth gradient corresponding to the real-time variation function; and
according to a historical up-regulation ratio of the rated bandwidth corresponding to the product line in a historical period and the latest smooth gradient, calculate the real-time up-regulation ratio of the rated bandwidth corresponding to the product line.

Optionally, the up-regulation module is specifically configured to:

according to a quantity of up-regulation times of the rated bandwidth and a preset up-regulation attenuation ratio corresponding to the product line in the current period, update a control coefficient of a current up-regulation step-size corresponding to the product line; and
according to the historical up-regulation ratio of the rated bandwidth corresponding to the product line in the historical period, and a product of the latest smooth gradient and the updated control coefficient of the up-regulation step-size, calculate the real-time up-regulation ratio of the rated bandwidth corresponding to the product line.

Optionally, the health value is generated by a calculation based on performance indexes of the network device and service parameters of the product line.
Another aspect of the present disclosure includes a rated bandwidth adjustment apparatus. The rated bandwidth adjustment apparatus includes a processor and a memory. The memory stores at least one instruction, at least one program, a set of codes or a set of instructions, and the at least one instruction, the at least one program, the set of codes or the set of instructions is loaded and executed by the processor to implement the disclosed method for adjusting a rated bandwidth.
Another aspect of the present disclosure includes a computer-readable storage medium. The storage medium stores at least one instruction, at least one program, a set of codes or a set of instructions. The at least one instruction, the at least one program, the set of codes or the set of instructions is loaded and executed by the processor to implement the disclosed method for adjusting a rated bandwidth.
The technical solutions in the disclosed embodiments of the present disclosure may have the following beneficial effects.
In the disclosed embodiments of the present disclosure, for any one product line of any one network device in the data transmission network, periodically according to the preset benchmark health value of the product line and the real-time health value in the current period, the rated bandwidth adjustment mode of the product line may be determined. Further, the health value may be obtained by calculation based on performance indexes of the network device and service parameters of the product line. When the rated bandwidth adjustment mode is up-regulation, according to the fluctuation of the real-time health value of the product line in the current period, the real-time up-regulation ratio of the rated bandwidth corresponding to the product line may be calculated. According to the real-time up-regulation ratio and the pre-stored basic up-regulation ratio of the rated bandwidth corresponding to the product line, the current rated bandwidth corresponding to the product line may be adjusted. Further, the basic up-regulation ratio may be obtained by calculation based on the historical bandwidth data of the network device and the historical health values of the product line. When the rated bandwidth adjustment mode is down-regulation, according to the preset down-regulation ratio of the rated bandwidth and the real-time bandwidth data of the network device in the current period, the current rated bandwidth corresponding to the product line may be adjusted. As such, using the bandwidth data of the network device and the health value of the product line, the adjustment mode and the adjustment amplitude of the rated bandwidth of each product line in each network device may be dynamically determined in real time according to a preset algorithm. The adjusted rated bandwidth may substantially accurately reflect the actual bandwidth load capability of each network device in the data transmission network when performing services of different product lines, and may be effectively applied to the actual planning and scheduling process for transmitting the network data flow. Therefore, the dynamically adjusted rated bandwidth may be used to determine the transmission path, and the transmission quality of the data transmission network may be ensured to a certain extent.

In addition, the adjustment of the rated bandwidth may be dynamically adjusted by the rated bandwidth adjustment apparatus based on the real-time data of the network device, may not need to be artificially specified with a specific value, and may have substantially strong adaptability. Further, the adjustment method may not depend on the initially set rated bandwidth value, even if the set initial rated bandwidth is inaccurate. The adjustment method disclosed in the present disclosure may also converge the rated bandwidth to a stable and reasonable range with a small quantity of adjustments. Therefore, the above-mentioned processing of adjusting the rated bandwidth may have substantially strong convergence and robustness.

BRIEF DESCRIPTION OF THE DRAWINGS

To more clearly illustrate the technical solutions in the disclosed embodiments of the present disclosure, drawings to be used in the description of the embodiments will be briefly described below. It is obvious that the drawings in the following description are certain embodiments of the present disclosure, and other drawings may be obtained by a person of ordinary skill in the art in view of the drawings provided without creative efforts.

Figure 1 illustrates a schematic diagram of a scenario framework of a data transmission network consistent with an embodiment of the present disclosure;

Figure 2 illustrates a flowchart of a method for adjusting a rated bandwidth consistent with an embodiment of the present disclosure;

Figure 3 illustrates a schematic diagram of a device for adjusting a rated bandwidth consistent with an embodiment of the present disclosure;

Figure 4 illustrates a schematic diagram of another device for adjusting a rated bandwidth consistent with an embodiment of the present disclosure; and

Figure 5 illustrates a schematic diagram of a rated bandwidth adjustment apparatus consistent with an embodiment of the present disclosure.

DETAILED DESCRIPTION

For clearer understanding of the technical characteristics, aims and effects of the present disclosure, specific embodiments of the present disclosure are now described in detail with reference to the accompanying drawings.

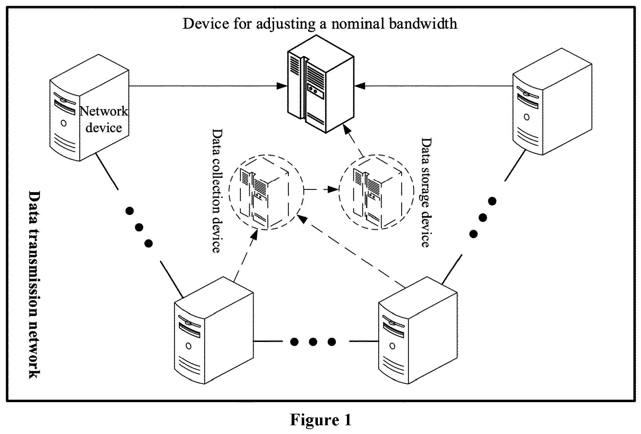

The disclosed embodiments of the present disclosure provide a method for adjusting a rated bandwidth. The method may be applied to a data transmission network, and may be specifically implemented by a rated bandwidth adjustment apparatus in the data transmission network. Further, the rated bandwidth adjustment apparatus may be a device for adjusting the rated bandwidth of different product line of each network device in the data transmission network. Through analyzing the bandwidth data of the network device and the health value of each product line, based on the analyze result, the rated bandwidth adjustment apparatus may implement the rated bandwidth adjustment process in units of network device + product line. Here, each network device in the data transmission network may simultaneously support services of at least one product line, and different product line may be used to transmit network flow with different data type. The collection and storage of the bandwidth data and the health value of the above-mentioned network device may be implemented by the rated bandwidth adjustment device, or may be respectively implemented by a data collection device and a data storage device in the data transmission network. The specific scenario framework may refer to Figure 1. The above-mentioned rated bandwidth adjustment apparatus may include a processor, a memory, and a transceiver. The processor may be used to perform processing for adjusting the rated bandwidth in the following process. The memory may be used to store data required and data generated in the following processing process. The transceiver may be used to receive and transmit relevant data in the following processing process. The above-described processing of adjusting the rated bandwidth, collecting and storing bandwidth data and health value may be implemented by a distributed system deployed inside the data transmission network. In an embodiment, for illustrative purposes, the processing of adjusting the rated bandwidth, collecting and storing data is entirely performed by a single rated bandwidth adjustment apparatus as an example, any other situation is similar, and which is not repeated herein.

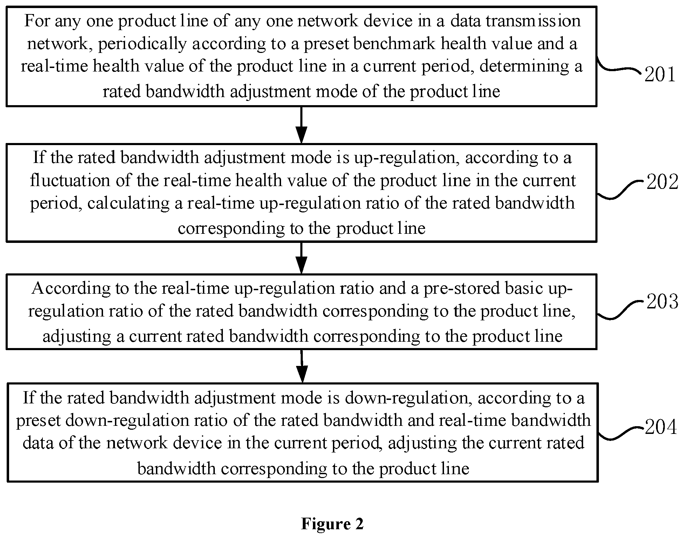

The processing flow illustrated in Figure 2 will be described in detail below with reference to specific implementations, and the content may include the following.

Step 201: For any one product line of any one network device in the data transmission network, periodically according to a preset benchmark health value and a real-time health value in a current period of the product line, a rated bandwidth adjustment mode of the product line may be determined.

Further, the health value may be generated by calculation based on performance indexes of the network device and service parameters of the product line.

In one embodiment, the rated bandwidth adjustment apparatus may periodically (the period of time may be 30 minutes) obtain real-time health values of entire product lines of entire network devices in the data transmission network in the current period. The health value may be generated by calculation based on the performance indexes of the network device including CPU usage, IO usage, memory usage, etc., and service parameters of the product line including a quantity of service processes, service response duration, etc. In one embodiment, the health value may be generated by a real-time calculation by each network device based on performance indexes and service parameters during the running process, may be stored accordingly, and then may be obtained by periodically collecting from each network device by the rated bandwidth adjustment device. In another embodiment, after the rated bandwidth adjustment apparatus obtains the performance indexes of each network device and service parameters of each product line, the health value may be obtained by a temporary calculation based on performance indexes and service parameters. Thereafter, for any one product line of any one network device in the data transmission network, according to the obtained real-time health value in the current period and the preset benchmark health value of the product line, the rated bandwidth adjustment apparatus may determine the rated bandwidth adjustment mode of the product line.

Optionally, the health value may be used to determine whether the product line is healthy, and to adjust the rated bandwidth accordingly. Correspondingly, the processing of step 201 may include the following. An average value of the real-time health values of the product line in the current period may be periodically calculated. If the average value is less than the preset benchmark health value of the product line, the rated bandwidth adjustment mode of the product line may be determined as up-regulation, otherwise determined as down-regulation.

In an implementation, for any one product line of any one network device in the data transmission network, the rated bandwidth adjustment apparatus may periodically calculate the average value $qos_{avg}$ of the real-time health values $qos_{real}$ of the product line in the current period, i.e.:

$$qos_{avg} = \frac{1}{t} \Sigma_i^t qos_{real}^i,$$

where t is the period length.

After that, the rated bandwidth adjustment apparatus may determine the size of the average value $qos_{avg}$ and the preset benchmark health value $qos_{bl}$ of the product line. If $qos_{avg} < qos_{bl}$, the product line may be in a healthy state, and the rated bandwidth of the product line may be up-regulated. In other words, the rated bandwidth adjustment mode of the product line may be determined as up-regulation. If $qos_{avg} \geq qos_{bl}$, the product line may be in an unhealthy state, and the rated bandwidth of the product line may desire to be down-regulated. In other words, the rated bandwidth adjustment mode of the product line may be determined as down-regulation.

Step 202: If the rated bandwidth adjustment mode is up-regulation, according to the fluctuation of the real-time health value of the product line in the current period, a real-time up-regulation ratio of the rated bandwidth corresponding to the product line may be calculated.

In an implementation, after determining that the rated bandwidth adjustment mode of a product line of a network device is up-regulation, according to the fluctuation of the real-time health value of the product line in the current period, the rated bandwidth adjustment apparatus may calculate the real-time up-regulation ratio of the rated bandwidth corresponding to the product line.

Optionally, after determining that the rated bandwidth adjustment mode is up-regulation, the real-time bandwidth data of the network device may be further used to determine whether to perform the up-regulation. Accordingly, a portion of the processing in step 202 may include the following. If a real-time bandwidth median of the network device in the current period is greater than a real-time bandwidth median of the network device in the previous period as well as greater than the current rated bandwidth corresponding to the product line, according to the fluctuation of the real-time health value of the product line in the current period, the real-time up-regulation ratio of the rated bandwidth corresponding to the product line may be calculated. Otherwise, the rated bandwidth adjustment mode may be determined as non-adjustment.

In one embodiment, after determining that the rated bandwidth adjustment mode corresponding to the product line is up-regulation, the rated bandwidth adjustment apparatus may obtain the real-time bandwidth median $\mathrm{bwi}^{iT}_{median}$ of the network device to which the product line belongs in the current period, and then may determine the size of the real-time bandwidth median $\mathrm{bwi}^{iT}_{median}$, the real-time bandwidth median of the network device in the previous period $\mathrm{bwi}^{iT-1}_{median}$, and the current rated bandwidth corresponding to the product line $\mathrm{bwi}^{T-1}_{rated}$. If the real-time bandwidth median $\mathrm{bwi}^{iT}_{median}$ of the network device in the current period is greater than the real-time bandwidth median $\mathrm{bwi}^{iT-1}_{median}$ of the network device in the previous period, as well as greater than the current rated bandwidth $\mathrm{bwi}^{iT-1}_{rated}$ corresponding to the product line, i.e., $\mathrm{bwi}^{T}_{median} \geq \max \left(\mathrm{bwi}^{T-1}_{rated}, \mathrm{bwi}^{T-1}_{median}\right)$, the rated bandwidth of the product line may be up-regulated. According to the fluctuation of the real-time health value of the product line in the current period, the real-time up-regulation ratio of the rated bandwidth corresponding to the product line may be calculated. Otherwise, the rated bandwidth of the product line may not be adjusted. In other words, the rated bandwidth adjustment mode of the product line may be determined as non-adjustment.

Optionally, the real-time up-regulation ratio of the rated bandwidth may be calculated by using a function gradient. Correspondingly, the processing of step 202 may include the following. According to the fluctuation of the real-time health value of the product line in the current period, a real-time variation function of a health value adjustment coefficient corresponding to the product line may be established. According to a derivative of the real-time variation function over the real-time health value and a preset smooth coefficient of the product line, as well as a historical smooth gradient corresponding to the real-time variation function, a latest smooth gradient corresponding to the real-time variation function may be calculated. According to a historical up-regulation ratio of the rated bandwidth corresponding to the product line in historical period and the latest smooth gradient, the real-time up-regulation ratio of the rated bandwidth corresponding to the product line may be calculated.

In one embodiment, after obtaining the fluctuation of the real-time health value of the product line in the current period, the rated bandwidth adjustment apparatus may establish the real-time variation function $f$ of the health value adjustment coefficient corresponding to the product line accordingly:

$$f = \frac{1}{t}\sum_i^t \frac{1}{1-(\mathrm{qos}_{bl}-\mathrm{qos}^i_{real})+\epsilon},$$

where t is the period length, $\mathrm{qos}_{real}$ is the real-time health value, and $\mathrm{qos}_{bl}$ is the preset benchmark health value. After that, the derivative $\mathrm{d}_{qos}$ of the real-time variation function $f$ over the real-time health value of the product line may be calculated:

$$\mathrm{d}_{qos} = -\frac{1}{t}\sum_i^t \frac{1}{(1-(\mathrm{qos}_{bl}-\mathrm{qos}^i_{real})+\varepsilon)^2}.$$

According to the derivative $\mathrm{d}_{qos}$, the preset smooth coefficient $\beta$, as well as the historical smooth gradient $V'_{\mathrm{d}_{qos}}$ corresponding to the real-time variation function $f$, the latest smooth gradient $V_{\mathrm{d}qos}$ corresponding to the real-time variation function may be calculated:

$$V_{d_{qos}} = \beta V'_{d_{qos}} + \frac{1-\beta}{d_{qos}}.$$

In view of this, according to the historical up-regulation ratio ratio$^{T-n}$ of the rated bandwidth corresponding to the product line in the historical period and the latest smooth gradient $V_{d_{qos}}$, the real-time up-regulation ratio ratio$^T$ of the rated bandwidth corresponding to the product line may be calculated, where *T* is the current period, and *T-n* is the historical period. In one embodiment, when $V_{d_{qos}} \geq 0$, ratio$^T$ = ratio$^{T-n}$ + $V_{d_{qos}}$; when $V_{d_{qos}} < 0$, ratio$^T$ = ratio$^{T-n}$.

Optionally, when calculating the real-time up-regulation ratio of the rated bandwidth of the product line, an attenuation processing to a certain extent may desire to be performed on an adjustment step-size of the rated bandwidth according to a quantity of times of up-regulation, and the corresponding processing may include the following. According to the quantity of times of up-regulation of the rated bandwidth and the preset up-regulation attenuation ratio corresponding to the product line in the current period, a control coefficient of the current up-regulation step-size corresponding to the product line may be updated. According to the historical up-regulation ratio of the rated bandwidth corresponding to the product line in the historical period, and the product of the latest smooth gradient and the updated control coefficient of the up-regulation step-size, the real-time up-regulation ratio of the rated bandwidth corresponding to the product line may be calculated.

In an implementation, the rated bandwidth adjustment apparatus may count the quantity of up-regulation times *iter* of the rated bandwidth of each product line in each cycle. Therefore, when calculating the real-time up-regulation ratio ratio$^T$ of the rated bandwidth of the product line, according to the quantity of up-regulation times *iter* of the rated bandwidth and the preset up-regulation attenuation ratio *decay* corresponding to the product line in the current period, the control coefficient a of the current up-regulation step-size corresponding to the product line may be updated, i.e.:

$$\alpha \leftarrow \alpha * \frac{1}{1+\text{decay}*\text{iter}}.$$

After that, according to the historical up-regulation ratio ratio$^{T-n}$ of the rated bandwidth corresponding to the product line in the historical period, and the product of the latest smooth gradient and the updated control coefficient of the up-regulation step-size $\alpha V_{d_{qos}}$, the rated bandwidth adjustment apparatus may calculate the real-time up-regulation ratio ratio$^T$ of the rated bandwidth corresponding to the product line. For example, when $V_{d_{qos}} \geq 0$, ratio$^7$ = ratio$^{T-n}$ + $\alpha V_{d_{qos}}$; when $V_{d_{qos}} < 0$, ratio$^T$ = ratio$^{T-n}$.

Step 203: According to the real-time up-regulation ratio and the pre-stored basic up-regulation ratio of the rated bandwidth corresponding to the product line, the current rated bandwidth corresponding to the product line may be adjusted.

In an implementation, after obtaining the real-time up-regulation ratio of the rated bandwidth corresponding to the product line by calculation, according to the real-time up-regulation ratio and the pre-stored basic up-regulation ratio of the rated bandwidth corresponding to the product line, the rated bandwidth adjustment apparatus may adjust the current rated bandwidth corresponding to the product line. For example, the current period is T, the real-time up-regulation ratio is ratio$^T$, the basic up-regulation ratio is ratio$^0$, the current rated bandwidth corresponding to the product line is $\text{bwi}_{\text{rated}}^{T-1}$, and, thus, the adjusted rated bandwidth may be $\text{bwi}_{\text{rated}}^{T} = \text{bwi}_{\text{rated}}^{T-1}(1 + \text{ratio}^T * \text{ratio}^0)$.

Step 204: If the rated bandwidth adjustment mode is down-regulation, according to a preset down-regulation ratio of the rated bandwidth and the real-time bandwidth data of the network device in the current period, the current rated bandwidth corresponding to the product line may be adjusted.

In an implementation, after determining that the rated bandwidth adjustment mode of a product line of a network device is down-regulation, according to the preset down-regulation ratio of the rated bandwidth and the real-time bandwidth data of the network device in the current period, the rated bandwidth adjustment apparatus may adjust the current rated bandwidth corresponding to the product line. Further, a product of the preset down-regulation ratio of the rated bandwidth and the current rated bandwidth corresponding to the product line may be first calculated, and then the current rated bandwidth corresponding to the product line may be adjusted to be a maximum between the product and the real-time bandwidth median of the network device in the current period. For example, the current period is T, the preset down-regulation ratio is $\omega$, the current rated bandwidth of the product line is $\text{bwi}_{\text{rated}}^{T-1}$, and the real-time bandwidth median in the current period is $\text{bwi}_{\text{median}}^{T}$, and, thus, the adjusted rated bandwidth may be

$$\mathrm{bwi}_{\mathrm{rated}}^{\mathrm{T}} = \max \left( \mathrm{bwi}_{\mathrm{median}}^{\mathrm{T}}, \mathrm{bwi}_{\mathrm{rated}}^{\mathrm{T-1}} * \omega \right).$$

Optionally, the method for determining the basic up-regulation ratio of the rated bandwidth corresponding to each product line of each network device by the rated bandwidth adjustment apparatus may include the following. A normal bandwidth value of the network device may be determined according to the historical bandwidth data of the network device after each preset time length, and a normal health value of the product line may be determined according to the historical health values of the product line. According to the normal bandwidth value and the normal health value, the basic up-regulation ratio of the rated bandwidth corresponding to the product line may be calculated and stored.

In an implementation, for any one product line of any one network device in the data transmission network, the rated bandwidth adjustment apparatus may obtain the historical bandwidth data (e.g., historical bandwidth data in the past one week) of the network device and the historical health values of the product line (e.g., historical health values in the past one week) after each preset time length (the preset time length may be 1 day). Then, the rated bandwidth adjustment apparatus may determine the normal bandwidth value of the network device according to the obtained historical bandwidth data, and at the same time, may determine the normal health value of the product line according to the historical health values of the product line. Further, according to the above-mentioned normal bandwidth value and the normal health value, the rated bandwidth adjustment apparatus may calculate the basic up-regulation ratio of the rated bandwidth corresponding to the product line.

Optionally, the method for determining the normal bandwidth value of the network device may include the following. Historical bandwidth data of entire network devices in the data transmission network may be obtained after each preset time length. According to data distribution characteristics of the historical bandwidth data of each network device, the entire network devices may be classified using an expectation-maximum (EM) clustering algorithm. For any one classification, by using the predetermined quantile corresponding to the classification, the normal bandwidth value of each network device under the classification among the entire historical bandwidth data of the network devices under the classification may be determined.

In an implementation, the rated bandwidth adjustment apparatus may obtain the historical bandwidth data of the entire network devices in the data transmission network after each preset time length, and then may determine the data distribution characteristics of the historical bandwidth data of each network device. The data distribution characteristics may include maximum and minimum, kurtosis, skewness, mean, and variance, etc., of the historical bandwidth data. After that, the rated bandwidth adjustment apparatus may use the data distribution characteristics to classify the entire network devices using the EM clustering algorithm according to a quantity of different categories, and may evaluate the classification result to select an appropriate quantity of categories. Here, whether the quantity of categories is appropriate may be determined by the technician based on experience, and the appropriate quantity of categories may be configured in the rated bandwidth adjustment apparatus. Next, for any one classification, the rated bandwidth adjustment apparatus may summarize the historical bandwidth data of the entire network devices under the one classification, may select bandwidth data pointed to by the preset quantile of the classification among the entire summarized historical bandwidth data, and may determine the bandwidth data as the normal bandwidth value of each network device under the classification.

Optionally, the method for determining the normal health value of the product line may include the following. The historical health values of each product line of each network device in the data transmission network may be obtained after each preset time length. According to the data distribution characteristics of the historical health values of each product line, the entire product lines may be classified using the EM clustering algorithm. For any one classification, by using the preset quantile corresponding to the classification, the normal health value of each product line under the classification among the entire historical health values of the product line under the classification may be determined.

In an implementation, the rated bandwidth adjustment apparatus may obtain the historical health values of each product line of each network device in the data transmission network after each preset time length, and then may determine the data distribution characteristics of the historical health values of each product line. The data distribution characteristics may include maximum and minimum, kurtosis, skewness, mean, and variance, etc., of the historical health values. After that, the rated bandwidth adjustment apparatus may use the data distribution characteristics to classify the entire product lines of the entire network devices using the EM clustering algorithm according to a quantity of different categories, and may evaluate the classification result to select an appropriate quantity of the categories. Here, whether the quantity of categories is appropriate may be determined by the technician based on experience, and the appropriate quantity of categories may be configured in the rated bandwidth adjustment apparatus. Next, for any one classification, the rated bandwidth adjustment apparatus may summarize the historical health values of the entire product lines under the one classification, may select health value pointed to by the preset quantile of the classification among the entire summarized historical health values, and may determine the health value as the normal health value of each product line under the classification.

Optionally, the method for calculating the basic up-regulation ratio based on the normal bandwidth value and the normal health value may include the following. According to the normal bandwidth value and the current rated bandwidth corresponding to the product line, a bandwidth adjustment coefficient of the rated bandwidth corresponding to the product line may be calculated. According to the normal health value and the preset benchmark health value of the product line, the health value adjustment coefficient of the rated bandwidth corresponding to the product line may be calculated. According to the bandwidth adjustment coefficient, the health value adjustment coefficient, and a preset up-regulation ratio limiting coefficient, the basic up-regulation ratio of the rated bandwidth corresponding to the product line may be calculated and stored.

In an implementation, according to the normal bandwidth value $bwi_{normal}$ and the current rated bandwidth $bwi_{rated}$ corresponding to the product line, the rated bandwidth adjustment apparatus may first calculate the bandwidth adjustment coefficient of the rated bandwidth corresponding to the product line:

$$stability_{coe} = sigmoid\left[\frac{\min\left(bwi_{rated}, bwi_{normal}\right)}{\max\left(bwi_{rated}, bwi_{normal}\right)}\right].$$

According to the normal health value $qos_{quantile}$ and the preset benchmark health value $qos_{bl}$ of the product line, the rated bandwidth adjustment apparatus may calculate the health value adjustment coefficient $qos_{coe}$ of the rated bandwidth corresponding to the product line. For example, when $qos_{quantile} < qos_{bl}$, $qos_{coe} = \frac{1}{1-(qos_{bl}-qos_{quantile})+\epsilon}$, where $\epsilon$ is the normalization factor; when $qos_{quantile} \geq qos_{bl}$, $qos_{coe} = 0$. After that, according to the bandwidth adjustment coefficient $stability_{coe}$, the health value adjustment coefficient $qos_{quantile}$, and the preset up-regulation ratio limiting coefficient $C_1 \in (0,1]$, the rated bandwidth adjustment apparatus may calculate the basic up-regulation ratio of the rated bandwidth corresponding to the product line: $ratio^0 = C_1 * \tanh(qos_{coe} * stability_{coe} * \in)$.

In the disclosed embodiments of the present disclosure, for any one product line of any one network device in the data transmission network, periodically according to the preset benchmark health value of the product line and the real-time health value in the current period, the rated bandwidth adjustment mode of the product line may be determined. Further, the health value may be obtained by calculation based on performance indexes of the network device and service parameters of the product line. When the rated bandwidth adjustment mode is up-regulation, according to the fluctuation of the real-time health value of the product line in the current period, the real-time up-regulation ratio of the rated bandwidth corresponding to the product line may be calculated. According to the real-time up-regulation ratio and the pre-stored basic up-regulation ratio of the rated bandwidth corresponding to the product line, the current rated bandwidth corresponding to the product line may be adjusted. Further, the basic up-regulation ratio may be obtained by calculation based on the historical bandwidth data of the network device and the historical health values of the product line. When the rated bandwidth adjustment mode is down-regulation, according to the preset down-regulation ratio of the rated bandwidth and the real-time bandwidth data of the network device in the current period, the current rated bandwidth corresponding to the product line may be adjusted. In view of this, using the bandwidth data of the network device and the health value of the product line, the adjustment mode and the adjustment amplitude of the rated bandwidth of each product line in each network device may be dynamically determined in real time according to a preset algorithm. The adjusted rated bandwidth may substantially accurately reflect the actual bandwidth load capability of each network device in the data transmission network when performing services of different product lines, and may be effectively applied to the actual planning and scheduling process for transmitting the network data flow. Therefore, the dynamically adjusted rated bandwidth may be used to determine the transmission path, and the transmission quality of the data transmission network may be ensured to a certain extent.

In addition, the adjustment of the rated bandwidth may be dynamically adjusted by the rated bandwidth adjustment apparatus based on the real-time data of the network device, may not desire to be artificially specified with a specific value, and may have substantially strong adaptability. Further, the adjustment method may not depend on the initially set rated bandwidth value, even if the set initial rated bandwidth is inaccurate. The adjustment method disclosed in the present disclosure may also converge the rated bandwidth to a stable and reasonable range with a small quantity of adjustments. Therefore, the above-mentioned processing of adjusting the rated bandwidth may have substantially strong convergence and robustness.

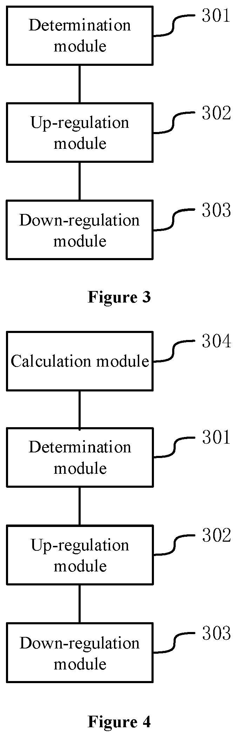

Based on a same technical concept, the disclosed embodiments of the present disclosure further provide a device for adjusting the rated bandwidth. Referring to Figure 3, the device may include:

a determination module 301, configured to: for any one product line of any one network device in the data transmission network, periodically according to the preset benchmark health value of the product line and the real-time health value in the current period, determine the rated bandwidth adjustment mode of the product line;

an up-regulation module 302, configured to: if the rated bandwidth adjustment mode is up-regulation, according to the fluctuation of the real-time health value of the product line in the current period, calculate the real-time up-regulation ratio of the rated bandwidth corresponding to the product line; and according to the real-time up-regulation ratio and the pre-stored basic up-regulation ratio of the rated bandwidth corresponding to the product line, adjust the current rated bandwidth corresponding to the product line; and

a down-modulation module 303, configured to: if the rated bandwidth adjustment mode is down-regulation, according to the preset down-regulation ratio of the rated bandwidth and the real-time bandwidth data of the network device in the current period, adjust the current rated bandwidth corresponding to the product line.

Optionally, Referring to Figure 4, the device may further include a calculation module 304, configured to:

determine a normal bandwidth value of the network device after each preset time length according to the historical bandwidth data of the network device, and determine a normal health value of the product line according to historical health values of the product line; and

based on the normal bandwidth value and the normal health value, calculate and store a basic up-regulation ratio of the rated bandwidth corresponding to the product line.

Optionally, the calculation module 304 may be specifically configured to:

obtain the historical bandwidth data of entire network devices in the data transmission network after each preset time length;

according to data distribution characteristics of the historical bandwidth data of each network device, classify the entire network devices using an EM clustering algorithm; and

for any one classification, determine the normal bandwidth value of each network device under the one classification among entire historical bandwidth data of the network devices under the one classification by using the preset quantile corresponding to the one classification.

Optionally, the calculation module 304 may be specifically configured to:

obtain historical health values of each product line of each network device in the data transmission network after each preset time length;

according to the data distribution characteristics of the historical health values of each product line, classify entire product lines using the EM clustering algorithm; and

for any one classification, determine the normal health value of each product line under the one classification in entire historical health values of the product lines under the one classification by using the preset quantile corresponding to the one classification.

Optionally, the calculation module 304 may be specifically configured to:

according to the normal bandwidth value and the current rated bandwidth corresponding to the product line, calculate a bandwidth adjustment coefficient of the rated bandwidth corresponding to the product line;

according to the normal health value and the preset benchmark health value of the product line, calculate a health value adjustment coefficient of the rated bandwidth corresponding to the product line; and

according to the bandwidth adjustment coefficient, the health value adjustment coefficient, and the preset up-regulation ratio limiting coefficient, calculate and store the basic up-regulation ratio of the rated bandwidth corresponding to the product line.

Optionally, the determination module 301 may be specifically configured to:

periodically calculate an average value of real-time health values of the product line in the current period; and

if the average value is less than a preset benchmark health value of the product line, set the rated bandwidth adjustment mode of the product line as up-regulation, otherwise as down-regulation.

Optionally, the up-regulation module 302 may be specifically configured to:
if a real-time bandwidth median of the network device in the current period is greater than a real-time bandwidth median of the network device in the previous period as well as greater than the current rated bandwidth corresponding to the product line, according to the fluctuation of the real-time health value of the product line in the current period, calculate the real-time up-regulation ratio of the rated bandwidth corresponding to the product line; otherwise, set the rated bandwidth adjustment mode as non-adjustment.

Optionally, the up-regulation module 302 may be specifically configured to:

according to the fluctuation of the real-time health value of the product line in the current period, establish a real-time variation function of the health value adjustment coefficient corresponding to the product line;

according to a derivative of the real-time variation function over the real-time health value and a preset smooth coefficient of the product line, as well as a historical smooth gradient corresponding to the real-time variation function, calculate a latest smooth gradient corresponding to the real-time variation function; and

according to a historical up-regulation ratio of the rated bandwidth corresponding to the product line in a historical period and the latest smooth gradient, calculate the real-time up-regulation ratio of the rated bandwidth corresponding to the product line.

Optionally, the up-regulation module 302 may be specifically configured to:

according to a quantity of up-regulation times of the rated bandwidth and the preset up-regulation attenuation ratio corresponding to the product line in the current period, update a control coefficient of the current up-regulation step-size corresponding to the product line; and

according to the historical up-regulation ratio of the rated bandwidth corresponding to the product line in the historical period, and the product of the latest smooth gradient and the updated control coefficient of the up-regulation step-size, calculate the real-time up-regulation ratio of the rated bandwidth corresponding to the product line.

Optionally, the health value may be generated by calculation according to performance indexes of the network device and service parameters of the product line.

In the disclosed embodiments of the present disclosure, for any one product line of any one network device in the data transmission network, periodically according to the preset benchmark health value of the product line and the real-time health value in the current period, the rated bandwidth adjustment mode of the product line may be determined. Further, the health value may be obtained by calculation based on performance indexes of the network device and service parameters of the product line. When the rated bandwidth adjustment mode is up-regulation, according to the fluctuation of the real-time health value of the product line in the current period, the real-time up-regulation ratio of the rated bandwidth corresponding to the product line may be calculated. According to the real-time up-regulation ratio and the pre-stored basic up-regulation ratio of the rated bandwidth corresponding to the product line, the current rated bandwidth corresponding to the product line may be adjusted. Further, the basic up-regulation ratio may be obtained by calculation based on the historical bandwidth data of the network device and the historical health values of the product line. When the rated bandwidth adjustment mode is down-regulation, according to the preset down-regulation ratio of the rated bandwidth and the real-time bandwidth data of the network device in the current period, the current rated bandwidth corresponding to the product line may be adjusted. In view of this, using the bandwidth data of the network device and the health value of the product line, the adjustment mode and the adjustment amplitude of the rated bandwidth of each product line in each network device may be dynamically determined in real time according to a preset algorithm. The adjusted rated bandwidth may substantially accurately reflect the actual bandwidth load capability of each network device in the data transmission network when performing services of different product lines, and may be effectively applied to the actual planning and scheduling process for transmitting the network data flow. Therefore, the dynamically adjusted rated bandwidth may be used to determine the transmission path, and the transmission quality of the data transmission network may be ensured to a certain extent.

In addition, the adjustment of the rated bandwidth may be dynamically adjusted by the rated bandwidth adjustment apparatus based on the real-time data of the network device, may not desire to be artificially specified with a specific value, and may have substantially strong adaptability. Further, the adjustment method may not depend on the initially set rated bandwidth value, even if the set initial rated bandwidth is inaccurate. The adjustment method disclosed in the present disclosure may also converge the rated bandwidth to a stable and reasonable range with a small quantity of adjustments. Therefore, the above-mentioned processing of adjusting the rated bandwidth may have substantially strong convergence and robustness.

It should be noted that, when the device for adjusting the rated bandwidth in the foregoing disclosed embodiments adjusts the rated bandwidth, for illustrative purposes, the division of the above functional modules may be described as an example. In practical applications, the functions may be assigned to be completed by different functional modules according to requirements. In other words, the internal structure of the device may be divided into different functional modules to complete entire or part of the above-described functions. In addition, the device for adjusting the rated bandwidth and the method for adjusting the rated bandwidth provided in the foregoing disclosed embodiments may belong to a same concept, and the detailed implementation process may refer to the disclosed embodiments of the method, which is not described herein again.

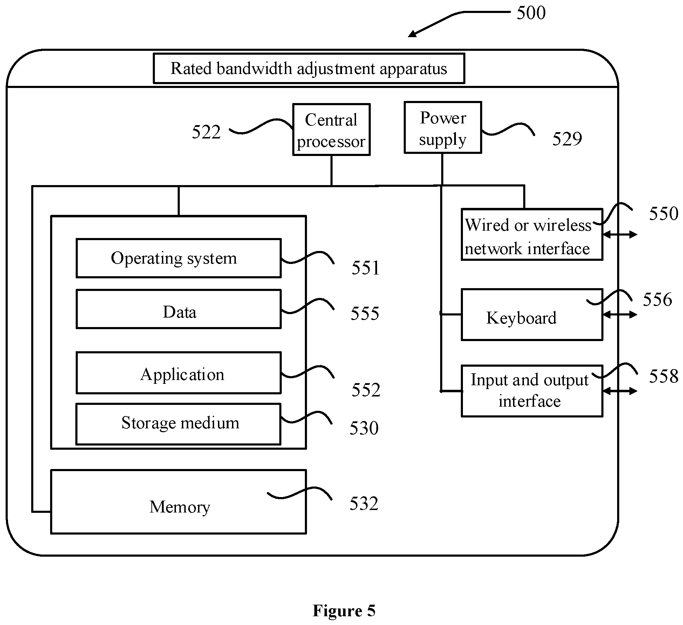

Figure 5 illustrates a schematic diagram of a rated bandwidth adjustment apparatus consistent with an embodiment of the present disclosure. The rated bandwidth adjustment apparatus 500 may vary considerably depending on different configuration or performance. The rated bandwidth adjustment apparatus 500 may include one or more central processors 522 (e.g., one or more processors), a memory 532, and one or more storage media 530 (e.g., one or more mass storage devices) for storing an application 552 or data 555. Further, the memory 532 and the storage medium 530 may be short-term storage or persistent storage. The program stored in storage medium 530 may include one or more modules (not illustrated), and each module may include a series of instruction operations performed on the rated bandwidth adjustment apparatus 500. Further, the central processor 522 may be configured to communicate with the storage medium 530 to perform the series of instruction operations in the storage medium 530 on the rated bandwidth adjustment apparatus 500.

The rated bandwidth adjustment apparatus 500 may further include one or more power supplies 529, one or more wired or wireless network interfaces 550, one or more input and output interfaces 558, one or more keyboards 556, and/or one or more operating systems 551, e.g., Windows Server, Mac OS X, Unix, Linux, and FreeBSD, etc.

The rated bandwidth adjustment apparatus 500 may include a memory, and one or more programs, where the one or more programs may be stored in the memory. The one or more programs including the above instructions for adjusting the rated bandwidth may be configured to be executed by one or more processors.

A person skilled in the art can understand that all or part of the procedures implementing the above embodiments may be completed through a hardware, or may be completed by instructing a related hardware through a program. The program may be stored in a computer-readable storage medium. The storage medium mentioned above may be a read-only memory, a magnetic disk, or an optical disk, etc.

The above descriptions are merely the preferred embodiments of the present disclosure, and are not intended to limit the present disclosure. Any modifications, equivalents, improvements, etc., which are within the spirit and scope of the present disclosure, should be included in the protection of the present disclosure.

**Claims**

1. A method for adjusting a rated bandwidth, wherein the method comprises:

   for any one product line of any one network device in a data transmission network, periodically according to a preset benchmark health value and a real-time health value of the product line in a current period, determining a rated bandwidth adjustment mode of the product line;
   if the rated bandwidth adjustment mode is up-regulation, according to a fluctuation of the real-time health value of the product line in the current period, calculating a real-time up-regulation ratio of the rated bandwidth corresponding to the product line;
   according to the real-time up-regulation ratio and a pre-stored basic up-regulation ratio of the rated bandwidth corresponding to the product line, adjusting a current rated bandwidth corresponding to the product line; and
   if the rated bandwidth adjustment mode is down-regulation, according to a preset down-regulation ratio of the rated bandwidth and real-time bandwidth data of the network device in the current period, adjusting the current rated bandwidth corresponding to the product line.

2. The method according to claim 1, wherein the method further comprises:

   determining a normal bandwidth value of the network device after each preset time length according to historical bandwidth data of the network device, and determining a normal health value of the product line according to historical health values of the product line; and

based on the normal bandwidth value and the normal health value, calculating and storing the basic up-regulation ratio of the rated bandwidth corresponding to the product line.

3. The method according to claim 2, wherein determining the normal bandwidth value of the network device after each preset time length according to the historical bandwidth data of the network device includes:

obtaining historical bandwidth data of entire network devices in the data transmission network after each preset time length;

according to data distribution characteristics of historical bandwidth data of each network device, classifying the entire network devices using an expectation-maximum (EM) clustering algorithm; and

for any one classification, determining the normal bandwidth value of each network device under the one classification among entire historical bandwidth data of network devices under the one classification by using a preset quantile corresponding to the one classification.

4. The method according to claim 2, wherein determining the normal health value of the product line according to the historical health values of the product line includes:

obtaining historical health values of each product line of each network device in the data transmission network after each preset time length;

according to data distribution characteristics of the historical health values of each product line, classifying entire product lines using an expectation-maximum (EM) clustering algorithm; and

for any one classification, determining the normal health value of each product line under the one classification among entire historical health values of product lines under the one classification by using a preset quantile corresponding to the one classification.

5. The method according to claim 2, wherein based on the normal bandwidth value and the normal health value, calculating and storing the basic up-regulation ratio of the rated bandwidth corresponding to the product line include:

according to the normal bandwidth value and the current rated bandwidth corresponding to the product line, calculating a bandwidth adjustment coefficient of the rated bandwidth corresponding to the product line;

according to the normal health value and the preset benchmark health value of the product line, calculating a health value adjustment coefficient of the rated bandwidth corresponding to the product line; and

according to the bandwidth adjustment coefficient, the health value adjustment coefficient, and a preset up-regulation ratio limiting coefficient, calculating and storing the basic up-regulation ratio of the rated bandwidth corresponding to the product line.

6. The method according to claim 1, wherein periodically according to the preset benchmark health value and the real-time health value of the product line in the current period, determining the rated bandwidth adjustment mode of the product line includes:

periodically calculating an average value of real-time health values of the product line in the current period; and

if the average value is less than the preset benchmark health value of the product line, setting the rated bandwidth adjustment mode of the product line as up-regulation, otherwise as down-regulation.

7. The method according to claim 1, wherein according to the fluctuation of the real-time health value of the product line in the current period, calculating the real-time up-regulation ratio of the rated bandwidth corresponding to the product line includes:

if a real-time bandwidth median of the network device in the current period is greater than a real-time bandwidth median of the network device in a previous period as well as greater than the current rated bandwidth corresponding to the product line, according to the fluctuation of the real-time health value of the product line in the current period, calculating the real-time up-regulation ratio of the rated bandwidth corresponding to the product line; otherwise, setting the rated bandwidth adjustment mode as non-adjustment.

8. The method according to claim 1, wherein according to the fluctuation of the real-time health value of the product line in the current period, calculating the real-time up-regulation ratio of the rated bandwidth corresponding to the product line includes:

according to the fluctuation of the real-time health value of the product line in the current period, establishing a real-time variation function of a health value adjustment coefficient corresponding to the product line; according to a derivative of the real-time variation function over the real-time health value and a preset smooth coefficient of the product line, as well as a historical smooth gradient corresponding to the real-time variation function, calculating a latest smooth gradient corresponding to the real-time variation function; and according to a historical up-regulation ratio of the rated bandwidth corresponding to the product line in a historical period and the latest smooth gradient, calculating the real-time up-regulation ratio of the rated bandwidth corresponding to the product line.

9.  The method according to claim 8, wherein according to the historical up-regulation ratio of the rated bandwidth corresponding to the product line in the historical period and the latest smooth gradient, calculating the real-time up-regulation ratio of the rated bandwidth corresponding to the product line includes:

according to a quantity of up-regulation times of the rated bandwidth and a preset up-regulation attenuation ratio corresponding to the product line in the current period, updating a control coefficient of a current up-regulation step-size corresponding to the product line; and according to the historical up-regulation ratio of the rated bandwidth corresponding to the product line in the historical period, and a product of the latest smooth gradient and the updated control coefficient of the up-regulation step-size, calculating the real-time up-regulation ratio of the rated bandwidth corresponding to the product line.

10. The method according to claims 1-9, further including:
generating the health value by a calculation based on performance indexes of the network device and service parameters of the product line.

11. A device for adjusting a rated bandwidth, wherein the device comprises:

a determination module, configured to, for any one product line of any one network device in a data transmission network, periodically according to a preset benchmark health value and a real-time health value of the product line in a current period, determine a rated bandwidth adjustment mode of the product line; an up-regulation module, configured to, if the rated bandwidth adjustment mode is up-regulation, according to a fluctuation of the real-time health value of the product line in the current period, calculate a real-time up-regulation ratio of the rated bandwidth corresponding to the product line, and according to the real-time up-regulation ratio and a pre-stored basic up-regulation ratio of the rated bandwidth corresponding to the product line, adjust a current rated bandwidth corresponding to the product line; and a down-modulation module, configured to, if the rated bandwidth adjustment mode is down-regulation, according to a preset down-regulation ratio of the rated bandwidth and real-time bandwidth data of the network device in the current period, adjust the current rated bandwidth corresponding to the product line.

12. The device according to claim 11, wherein the device further comprises a calculation module, configured to:

determine a normal bandwidth value of the network device after each preset time length according to historical bandwidth data of the network device, and determine a normal health value of the product line according to historical health values of the product line; and based on the normal bandwidth value and the normal health value, calculate and store the basic up-regulation ratio of the rated bandwidth corresponding to the product line.

13. The device according to claim 12, wherein the calculation module is specifically configured to:

obtain historical bandwidth data of entire network devices in the data transmission network after each preset time length; according to data distribution characteristics of historical bandwidth data of each network device, classify the entire network devices using an expectation-maximum (EM) clustering algorithm; and for any one classification, determine the normal bandwidth value of each network device under the one classification among entire historical bandwidth data of network devices under the one classification by using a preset quantile corresponding to the one classification.

14. The device according to claim 12, wherein the calculation module is specifically configured to:

obtain historical health values of each product line of each network device in the data transmission network after each preset time length;

according to data distribution characteristics of the historical health values of each product line, classify entire product lines using an expectation-maximum (EM) clustering algorithm; and

for any one classification, determine the normal health value of each product line under the one classification among entire historical health values of product lines under the one classification by using a preset quantile corresponding to the one classification.

15. The device according to claim 12, wherein the calculation module is specifically configured to:

according to the normal bandwidth value and the current rated bandwidth corresponding to the product line, calculate a bandwidth adjustment coefficient of the rated bandwidth corresponding to the product line;

according to the normal health value and the preset benchmark health value of the product line, calculate a health value adjustment coefficient of the rated bandwidth corresponding to the product line; and

according to the bandwidth adjustment coefficient, the health value adjustment coefficient, and a preset up-regulation ratio limiting coefficient, calculate and store the basic up-regulation ratio of the rated bandwidth corresponding to the product line.

16. The device according to claim 11, wherein the determination module is specifically configured to:

periodically calculate an average value of real-time health values of the product line in the current period; and

if the average value is less than the preset benchmark health value of the product line, set the rated bandwidth adjustment mode of the product line as up-regulation, otherwise as down-regulation.

17. The device according to claim 11, wherein the up-regulation module is specifically configured to:
if a real-time bandwidth median of the network device in the current period is greater than a real-time bandwidth median of the network device in a previous period as well as greater than the current rated bandwidth corresponding to the product line, according to the fluctuation of the real-time health value of the product line in the current period, calculate the real-time up-regulation ratio of the rated bandwidth corresponding to the product line; otherwise, set the rated bandwidth adjustment mode as non-adjustment.

18. The device according to claim 11, wherein the up-regulation module is specifically configured to:

according to the fluctuation of the real-time health value of the product line in the current period, establish a real-time variation function of a health value adjustment coefficient corresponding to the product line;

according to a derivative of the real-time variation function over the real-time health value and a preset smooth coefficient of the product line, as well as a historical smooth gradient corresponding to the real-time variation function, calculate a latest smooth gradient corresponding to the real-time variation function; and

according to a historical up-regulation ratio of the rated bandwidth corresponding to the product line in a historical period and the latest smooth gradient, calculate the real-time up-regulation ratio of the rated bandwidth corresponding to the product line.

19. The device according to claim 18, wherein the up-regulation module is specifically configured to:

according to a quantity of up-regulation times of the rated bandwidth and a preset up-regulation attenuation ratio corresponding to the product line in the current period, update a control coefficient of a current up-regulation step-size corresponding to the product line; and

according to the historical up-regulation ratio of the rated bandwidth corresponding to the product line in the historical period, and a product of the latest smooth gradient and the updated control coefficient of the up-regulation step-size, calculate the real-time up-regulation ratio of the rated bandwidth corresponding to the product line.

20. The device according to claims 11-19, wherein the health value is generated by a calculation based on performance indexes of the network device and service parameters of the product line.

21. A rated bandwidth adjustment apparatus, wherein the rated bandwidth adjustment apparatus comprises a processor and a memory, wherein the memory stores at least one instruction, at least one program, a set of codes or a set of instructions, or the at least one instruction, the at least one program, the set of codes or the set of instructions is loaded and executed by the processor to implement the method for adjusting a rated bandwidth in any one of claims 1-10.

22. A computer-readable storage medium, wherein the storage medium stores at least one instruction, at least one program, a set of codes or a set of instructions, or the at least one instruction, the at least one program, the set of codes or the set of instructions is loaded and executed by the processor to implement the method for adjusting a rated bandwidth in any one of claims 1-10.

**Figure 1**

For any one product line of any one network device in a data transmission network, periodically according to a preset benchmark health value and a real-time health value of the product line in a current period, determining a rated bandwidth adjustment mode of the product line ⟩~201

If the rated bandwidth adjustment mode is up-regulation, according to a fluctuation of the real-time health value of the product line in the current period, calculating a real-time up-regulation ratio of the rated bandwidth corresponding to the product line ⟩~202

According to the real-time up-regulation ratio and a pre-stored basic up-regulation ratio of the rated bandwidth corresponding to the product line, adjusting a current rated bandwidth corresponding to the product line ⟩~203

If the rated bandwidth adjustment mode is down-regulation, according to a preset down-regulation ratio of the rated bandwidth and real-time bandwidth data of the network device in the current period, adjusting the current rated bandwidth corresponding to the product line ⟩~204

**Figure 2**

Determination
module — 301

Up-regulation
module — 302

Down-regulation
module — 303

**Figure 3**

Calculation module — 304

Determination
module — 301

Up-regulation
module — 302

Down-regulation
module — 303

**Figure 4**

500

Rated bandwidth adjustment apparatus

522 — Central processor

Power supply

529

Operating system — 551

Data — 555

Application — 552

Storage medium — 530

Wired or wireless network interface — 550

Keyboard — 556

Input and output interface — 558

Memory — 532

**Figure 5**

## INTERNATIONAL SEARCH REPORT

| International application No. |
|---|
| **PCT/CN2018/119597** |

| | |
|---|---|
| **A.** | **CLASSIFICATION OF SUBJECT MATTER** |
| | H04L 12/917(2013.01)i |
| | According to International Patent Classification (IPC) or to both national classification and IPC |

| | |
|---|---|
| **B.** | **FIELDS SEARCHED** |

Minimum documentation searched (classification system followed by classification symbols)

    H04L

Documentation searched other than minimum documentation to the extent that such documents are included in the fields searched

Electronic data base consulted during the international search (name of data base and, where practicable, search terms used)

    CNABS; CNTXT; CNKI; VEN; WOTXT; EPTXT; USTXT: 额定带宽, 调整, 改, 变, 大, 小, 上调, 下调, 实时, 动态, 自适应; rated bandwidth, adjust, change, vary, up, down, big, small, real time, dynamic, adaptive

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 107920031 A (CHINA TELECOM CORPORATION LIMITED) 17 April 2018 (2018-04-17)<br>    description, paragraphs 33-62 and 77 | 1-22 |
| A | CN 104158761 A (HUAWEI TECHNOLOGIES CO., LTD.) 19 November 2014 (2014-11-19)<br>    entire document | 1-22 |
| A | WO 2009127734 A1 (THOMSON LICENSING) 22 October 2009 (2009-10-22)<br>    entire document | 1-22 |

☐ Further documents are listed in the continuation of Box C.     ☑ See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 July 2019** | **30 July 2019** |

| Name and mailing address of the ISA/CN | Authorized officer |
|---|---|
| **State Intellectual Property Office of the P. R. China**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/119597**

| Patent document cited in search report | | | Publication date (day/month/year) | Patent family member(s) | | | Publication date (day/month/year) |
|---|---|---|---|---|---|---|---|
| CN | 107920031 | A | 17 April 2018 | None | | | |
| CN | 104158761 | A | 19 November 2014 | EP | 3166267 | A1 | 10 May 2017 |
| | | | | EP | 3166267 | A4 | 16 August 2017 |
| | | | | CN | 104158761 | B | 13 February 2018 |
| | | | | US | 2017150401 | A1 | 25 May 2017 |
| | | | | US | 10251091 | B2 | 02 April 2019 |
| | | | | WO | 2016019822 | A1 | 11 February 2016 |
| | | | | EP | 3166267 | B1 | 02 January 2019 |
| WO | 2009127734 | A1 | 22 October 2009 | None | | | |

Form PCT/ISA/210 (patent family annex) (January 2015)